# EUROPÄISCHE PATENTSCHRIFT

(11) **EP 3 594 053 B1**
(45) Veröffentlichungstag und Bekanntmachung des Hinweises auf die Patenterteilung: **26.05.2021**
(21) Anmeldenummer: 19185440.5
(22) Anmeldetag: 10.07.2019
(51) Int. Cl.: B60N 2/02, H01H 25/00

(54) **FAHRZEUGSITZ MIT BEDIENEINRICHTUNG**
VEHICLE SEAT WITH CONTROL DEVICE
SIÈGE DE VÉHICULE POURVU D'UN DISPOSITIF DE COMMANDE

(30) Priorität: 13.07.2018 DE 102018116991
(43) Veröffentlichungstag der Anmeldung: 15.01.2020
(73) Patentinhaber: GRAMMER AG, 92289 Ursensollen (DE)
(72) Erfinder: Frohriep, Susanne, 92224 Amberg (DE); Coppejans, Laurent, 3090 Overijse (BE); Kolb, Jens, 92281 Königstein (DE)
(74) Vertreter: Hannke, Christian

(56) Entgegenhaltungen:
- EP-A1- 2 735 469
- EP-A2- 2 163 420
- DE-A1- 19 952 560
- DE-A1-102012 214 295
- GB-A- 2 535 535

## Beschreibung

Die Erfindung betrifft eine Bedieneinrichtung zur Einstellung von Sitzparametern eines Sitzes, insbesondere eines Fahrzeugsitzes. Ferner betrifft die Erfindung einen Sitz, insbesondere Fahrzeugsitz, mit einer Bedieneinrichtung zur Einstellung von Sitzparametern.

In Kraftfahrzeugen, insbesondere in Nutzfahrzeugen, wie Traktoren oder LKW, ist es aufgrund der unter Umständen langen Fahrtzeiten wichtig, dem Fahrer einen höchstmöglichen Sitzkomfort zu bieten. Um dies zu ermöglichen, können die Fahrer eine Vielzahl von Sitzparametern ihren Bedürfnissen entsprechend einstellen. Derartige Sitzparameter können beispielsweise die Sitzhöhe, die Sitzposition in Längsrichtung (X), die Position und Ausrichtung von einzelnen Komponenten des Sitzes wie Rückenlehne, Kopfteil, Sitzkissenteil oder aber auch Einstellung einer Feder- und/oder Dämpfeinrichtung sein. Ferner können entsprechende Sitzparameter eine Sitzkomforteinrichtung betreffen, beispielsweise eine Sitzklimatisierungseinrichtung, eine Sitzkontureinstellungseinrichtung oder eine Massageeinrichtung.

Üblicherweise ist zur Einstellung jedes Sitzparameters ein entsprechendes Stellteil, wie bespielsweise ein Schalter oder ein Taster vorgesehen. Dieses hat zur Folge, dass eine Vielzahl von solchen Stellteilen notwendig ist, wodurch zum einen die Bedienung für den Fahrer unübersichtlich wird und zum anderen großer Bauraum in Anspruch genommen wird. Die GB 2 535 535 A und die DE 199 52 560 A1 offenbaren Beispiele von Bedieneinrichtungen aus dem Stand der Technik.

Aufgabe der Erfindung ist es demnach, die Bedienung einer Vielzahl von Sitzparametern in einer Art und Weise zu ermöglichen, welche sowohl übersichtlich für die Bediener ist, als auch Bauraum spart.

Diese Aufgabe wird von einer Bedieneinrichtung gemäß Anspruch 1 gelöst.

Im Folgenden wird die Bedieneinrichtung im Zusammenhang mit einem Sitz beschrieben. Dies soll nicht als Einschränkung gedacht sein. Weitere Anwendungen zur Einstellung verschiedenster Parameter wären durchaus ebenso denkbar.

Nach einer besonders bevorzugten Ausführungsform ist das Multifunktionsbedienelement mit dem Sitz derart verbunden, dass eine erfindungsgemäße Bewegung ermöglicht ist. Durch das Auswahlelement kann eine bestimmte Bedienebene ausgewählt werden, welche eine Funktionengruppe, beispielsweise die Einstellung der Sitzparameter für eine bestimmte Komponente des Sitzes umfasst. Dadurch, dass mittels des Multifunktionsbedienelements mehrere Bedienebenen, welche mehrere Funktionen beinhalten kann, bedient werden können, kann auf eine Vielzahl individueller Schalter und Taster verzichtet werden. Es wird somit erheblich Bauraum gespart. Die Herstellungskosten reduzieren sich ebenso, da weniger Bauteile verbaut werden müssen. Schließlich wird dem Nutzer eine übersichtliche Bedienung präsentiert, da nicht mehr nach dem jeweils relevanten Schalter, beziehungsweise Taster gesucht werden muss, sondern unterschiedliche Parameter mit einem Stellteil angesteuert werden. Unter Sitzparameter sind alle Einstellungen eines Sitzes oder Einrichtungen, welche mit dem Sitz assoziiert sind, zu verstehen. Es können jedoch auch Einstellungen von weiteren Einrichtungen des Fahrzeugs unter einem solchen Sitzparameter verstanden werden.

Nach einer bevorzugten Ausführungsform umfasst die Bedieneinrichtung ein einziges Multifunktionsbedienelement. Mittels diesem einzigen Multifunktionsbedienelement ist eine Vielzahl von Sitzparametern einstellbar.

Nach einer weiteren bevorzugten Ausführungsform umfasst die Bedieneinrichtung zwei oder mehrere Multifunktionsbedienelemente. Diese Multifunktionselemente können die gleichen Bedienebenen mit den dazugehörigen Funktionen zur Auswahl haben. Den Nutzern wird somit die Möglichkeit gegeben, an unterschiedlich zugänglichen Stellen des Sitzes greifen zu können, um die entsprechenden Sitzparameter zu ändern. Diese Sitzparameter können somit in unterschiedlichen Fahrsituationen entsprechend bequem geändert werden.

Es wäre aber auch denkbar, dass die unterschiedlichen Multifunktionsbedienelemente unterschiedliche Bedienebenen aufweisen, wodurch eine Aufteilung der Bedienebenen in ähnliche Änderungen der Sitzparameter möglich ist. Dies kann von Vorteil sein, wenn eine große Anzahl von Bedienebenen vorhanden ist.

Im Folgenden wird sich nur auf ein Multifunktionsbedienelement bezogen. Selbstverständlich können jedoch im Falle, dass die Bedieneinrichtung zwei oder mehrere Multifunktionsbedienelemente aufweist, die weiteren Multifunktionsbedienelemente die entsprechenden Merkmale aufweisen.

Nach einer besonders bevorzugten Ausführungsform ist das Multifunktionsbedienelement in sechs Schaltrichtungen bewegbar. Vorzugsweise weist das Multifunktionsbedienelement drei Bewegungsachsen auf. Bevorzugt sind jeweils zwei entgegengesetzte Schaltrichtungen entlang einer Bewegungsachse (X, Y, Z) orientiert.

Vorzugsweise entsprechen eine erste und eine zweite Schaltrichtung einer translatorischen Bewegung des Multifunktionsbedienelements entlang einer ersten Bewegungsachse (X) in entgegengesetzten Richtungen. Das Multifunktionsbedienelement kann somit durch Ziehen oder Schieben entlang der ersten, beziehungsweise zweiten Schaltrichtung bewegt werden. Vorzugsweise verläuft die erste Bewegungsachse (X) entlang der horizontalen Längsrichtung (X1) des Sitzes. Eine Verlagerung des Sitzes entlang dieser Längsrichtung (X1) entspricht somit der Änderung des Abstands des Sitzes zu den Bedienelementen des Fahrzeugs in Längsrichtung.

Nach einer weiteren bevorzugten Ausführungsform entsprechen eine dritte und eine vierte Schaltrichtung einer translatorischen Bewegung des Multifunktionsbedienelements entlang einer zweiten Bewegungsachse (Z) in jeweils entgegengesetzten Richtungen. Alternativ entsprechen die dritte und die vierte Schaltrichtung einer Drehbewegung des Multifunktionsbedienelements um die erste Bewegungsachse (X) in entgegengesetzten Richtungen. Vorzugsweise verläuft die zweite Bewegungsachse (Y) entlang der Höhenrichtung (Z1) des Sitzes und ist senkrecht zu der ersten Bewegungsachse (X). Sowohl eine translatorische Bewegung des Multifunktionsbedienelements entlang der zweiten Bewegungsachse (Z) als auch eine Drehbewegung des Multifunktionsbedienelements um die erste Bewegungsachse (X) bedeutet für die sich im Sitz befindliche Person eine Bewegung des Multifunktionsbedienelements nach oben oder unten. Vorzugsweise ist der Drehpunkt dabei nahe am Sitz, um eine leichte Drehbewegung des Multifunktionsbedienelements zu ermöglichen.

Nach einer weiteren bevorzugten Ausführungsform entsprechen eine fünfte und eine sechste Schaltrichtung einer Drehbewegung des Multifunktionsbedienelements um die dritte Bewegungsachse (Y) in jeweils entgegengesetzte Richtungen. Vorzugsweise verläuft die dritte Bewegungsachse (Y) entlang der Breitenrichtung (Y1) des Sitzes und ist senkrecht zu der ersten Bewegungsachse (X) und der zweiten Bewegungsachse (Z). Der Drehpunkt kann dabei mittig, außermittig des Multifunktionsbedienelements angeordnet sein. Alternativ könnte der Drehpunkt an einem vorderen oder einem hinteren Ende Multifunktionsbedienelements angeordnet sein. Entsprechend der Anordnung des Drehpunkts ergeben sich unterschiedliche Neigungsarten des Multifunktionsbedienelements.

Nach einer weiteren bevorzugten Ausführungsform umfasst das Multifunktionsbedienelement eine Rückstelleinheit, so dass das Multifunktionsbedienelement nach einer Auslenkung entlang einer bestimmten Schaltrichtung nach einer vorbestimmten Zeit mittels der Rückstelleinheit in seine Ausgangstellung verlagerbar ist. Eine solche Rückstelleinheit könnte ein Federelement, ein elastisches Element oder ein Aktuator, der elektrisch pneumatisch oder hydraulisch betrieben ist, sein.

Nach einer bevorzugten Ausführungsform ist mittels des zumindest einen Auswahlelements sowohl eine Bedienebene auswählbar, als auch eine bestimmte Funktion direkt bedienbar. Der Nutzer kann somit die gewünschten Einstellungen der Sitzparameter durch eine entsprechende Bewegung des Multifunktionsbedienelements entlang der Schaltrichtungen als auch mittels des Auswahlelements direkt einstellen.

Erfindungsgemäß ist das Auswahlelement ein Berührbildschirm zum Anzeigen und Auswählen von zumindest zwei Bedienfeldern. Erfindungsgemäß repräsentiert ein Bedienfeld eine Bedienebene. Erfindungsgemäß ist mittels zumindest einer ersten Benutzereingabe ein Bedienfeld auswählbar.

Erfindungsgemäß zeigt der Berührbildschirm jeweils ein einziges Bedienfeld an. Mittels des Berührbildschirms wird somit immer genau ein einer bestimmten Bedienebene zugeordnetes Bedienfeld angezeigt. Die der Bedienebene zugehörige Funktion ist dann durch eine entsprechende Bewegung des Multifunktionsbedienelements bedienbar.

Alternativ oder kumulativ ist die Funktion mittels einer zweiten Benutzereingabe durch den Berührbildschirm bedienbar. Dazu kann das Bedienfeld mehrere Unterbedienfelder aufweisen, mittels welchen die jeweiligen Funktionen bedienbar sind.

Vorteilhafterweise sind dabei die erste und die zweite Benutzereingabe voneinander verschieden.

Erfindungsgemäß sind die Bedienfelder in einer festen Reihenfolge angeordnet. Eine feste Reihenfolge ist dahingehend vorteilhaft, dass der Fahrzeugführer durch die mindestens eine erste Benutzereingabe ohne Blickkontakt zwischen den Bedienfeldern wechseln kann und nach einer bestimmten Anzahl von ersten Benutzereingaben das gewünschte Bedienfeld erreicht. Ferner kann die Reihenfolge dahingehend gestaltet sein, dass die häufiger verwendeten Bedienfelder, beziehungsweise Bedienebenen am Beginn der Reihenfolge stehen und zum Ende hin sich die üblicherweise weniger benutzten befinden.

Erfindungsgemäß ist die Benutzereingabe eine Wischbewegung oder eine Tippbewegung. Vorzugsweise ist die erste Benutzereingabe eine Wischbewegung und die zweite Benutzereingabe eine Tippbewegung.

Insbesondere handelt es sich bei der Wischbewegung um eine Bewegung auf dem Bildschirm, besonders vorteilhaft entlang einer horizontalen Linie des Bildschirms, also einfach gesprochen, um eine Bewegung von links nach rechts oder umgekehrt.

Die Tippbewegung erfolgt auf die entsprechenden Unterbedienfelder, welche ein oder mehrere sensitive Tastenbereiche auf dem Bedienfeld ist, beziehungsweise sind. Wird eine Tippbewegung auf einem der Tastenbereiche ausgeführt, so wird der Sitzparameter abhängig von dieser Eingabe verändert.

Nach einer weiteren bevorzugten Ausführungsform umfasst die Bedieneinrichtung eine Steuereinheit, welche ein Steuersignal des Multifunktionsbedienelements empfängt. Bevorzugt sind zumindest ein Aktuator und/oder zumindest eine Feder- und/oder Dämpfeinrichtung und/oder zumindest eine Sitzkomforteinrichtung mittels der Steuereinheit ansteuerbar.

Vorzugsweise verändert der Aktuator die Sitzparameter bezüglich der Position und oder Ausrichtung des gesamten Sitzes oder zumindest einer Komponente.

Nach einer weiteren bevorzugten Ausführungsform ist nach der Auswahl einer Bedienebene nach einer vorbestimmten ersten Zeitdauer ein Kennsignal von dem Berührbildschirm zu der Steuereinheit übermittelbar. Vorzugsweise aktiviert die Steuereinheit nach Erhalt des Kennsignals einen der Bedienebene zugeordneten Aktuator kurzzeitig.

Das bedeutet, dass nach einer Auswahl eines Bedienfeldes und nach einer vorbestimmten ersten Zeitdauer ein Kennsignal von dem Berührbildschirm zu der Steuereinheit übermittelt wird, wobei mittels des Kennsignals der Steuereinheit mitgeteilt wird, welche Bedienebene aktuell ausgewählt ist. Nachdem die Steuereinheit dieses Kennsignal empfangen hat und mitgeteilt wurde, welche Bedienebene ausgewählt ist, übermittelt die Steuereinheit ein Aktivierungssignal an den zu dem ausgewählten Bedienebenen zugehörigen Aktuator, wodurch der Aktuator kurzzeitig aktiviert wird.

Unter kurzzeitig ist hierbei eine Zeitdauer von weniger als 5 Sekunden, bevorzugter von weniger als 2 Sekunden und besonders bevorzugt von höchstens 1 Sekunde und mehr bevorzugt von höchstens 0,5 Sekunden zu verstehen.

Durch diese kurzzeitige Aktivierung wird ein zusätzliches Feedback für den Fahrzeugführer geschaffen, so dass dieser ohne einen Blickkontakt auf den Berührbildschirm erkennen kann, welches Bedienfeld aktuell ausgewählt ist und insbesondere welcher Sitzparameter dadurch einstellbar ist.

Nach einer weiteren bevorzugten Ausführungsform ist die Bedieneinrichtung manuell deaktivierbar.

Nach einer weiteren bevorzugten Ausführungsform ist die Bedieneinrichtung nach einer vorbestimmten zweiten Zeitdauer automatisch deaktivierbar. Demnach ist es vorteilhaft, wenn nach einer vorbestimmten zweiten Zeitdauer durch die Steuereinheit ein Deaktivierungssignal an den Berührbildschirm gesendet ist, wodurch der Berührbildschirm automatisch deaktivierbar ist.

Das bedeutet, dass falls der Fahrzeugführer keine Einstellungen mehr machen möchte oder bereits alle Einstellungen am Fahrzeugsitz vorgenommen hat, der Berührbildschirm automatisch deaktivert wird und daher nicht unabsichtlich betätigt werden kann. Insbesondere muss der Fahrzeugführer auch keine manuelle Deaktivierung des Berührbildschirms vornehmen, so dass ein erhöhter Komfort in der Bedienung der Sitzbedienungseinrichtung gewährleistet werden kann.

Die zweite Zeitdauer beträgt dabei vorzugsweise höchstens 5 Minuten, bevorzugter 2 Minuten und besonders bevorzugt höchstens 1 Minute.

Vorzugsweise ist die Bedieneinrichtung durch eine Bewegung des Multifunktionsbedienelements aktivierbar. Dazu kann vorgesehen sein, dass eine Bewegung in einer beliebigen Schaltrichtung zur Aktivierung notwendig ist. Alternativ kann vorgesehen sein, dass eine Bewegung in einer vorbestimmten Schaltrichtung zur Aktivierung notwendig ist.

Alternativ kann auch ein Aktivierungselement vorgesehen sein, mittels welchem die Bedieneinrichtung aktivierbar ist. Durch das Aktivierungselement ist der Berührbildschirm entsperrbar, wodurch ein erstes Bedienfeld auf dem Berührbildschirm angezeigt wird. Ein solches Aktivierungselement ist vor allem dann vorteilhaft, wenn der Berührbildschirm und entsprechend die Bedienfelder in Umgebungen angeordnet sind, in welchen eine unbeabsichtigte Berührung bzw. Betätigung durch den Fahrzeugführer nicht ausgeschlossen werden kann. Ist der Berührbildschirm jedoch in einer Umgebung angeordnet, in welcher eine derartige unbeabsichtigte Betätigung durch den Fahrzeugführer ausgeschlossen oder nahezu ausgeschlossen werden kann, so kann auf ein Aktivierungselement verzichtet werden, und die Bedieneinrichtung ist zumindest während einer Benutzung des Fahrzeugs bzw. des Fahrzeugsitzes aktiv.

Das Aktivierungselement kann dabei als ein Teil des Berührbildschirms ausgebildet sein. Insbesondere ist das Aktivierungselement haptisch von dem sensitiven Bereich des Berührbildschirms unterscheidbar. Das Aktivierungselement kann allerdings auch als sonstiger Schalter oder Taster ausgebildet sein.

Gemäß einer weiteren bevorzugten Ausführungsform ist die Bedieneinrichtung ständig aktiviert. Unter ständig aktiviert ist hierbei zu verstehen, dass die Bedieneinrichtung aktiv ist, solange das Fahrzeug und/oder der Fahrzeugsitz aktiv genutzt wird. Ist das Fahrzeug deaktiviert oder der Fahrzeugsitz nicht belegt, so ist ebenso die Sitzbedienungseinrichtung deaktiviert.

Gemäß einer weiteren bevorzugten Ausführungsform wird nach einer vorbestimmten dritten Zeitdauer auf dem Berührbildschirm das erste Bedienfeld anzeigt. Vorzugsweise sendet nach der vorbestimmten dritten Zeitdauer die Steuereinheit ein Rückstellsignal an den Berührbildschirm, wodurch das zuerst angezeigte Bedienfeld angezeigt wird.

Nach Aktivierung der Sitzbedienungseinrichtung, unabhängig davon wie diese aktiviert wurde, wird zunächst ein erstes Bedienfeld in der vorbestimmten Reihenfolge der Bedienfelder an dem Berührbildschirm angezeigt. Ein solches erstes Bedienfeld kann einer Bedienebene zugeordnet sein, welche häufiger als die Anderen verwendet wird.

Die dritte Zeitdauer beträgt dabei bevorzugt mindestens eine Minute, bevorzugt mindestens 2 Minuten, weiter bevorzugt mindestens 5 Minuten und besonders bevorzugt mindestens 10 Minuten.

Nach einer weiteren bevorzugten Ausführungsform ist die Bedieneinheit mit einem weiteren Mobilgerät mittels einer Drahtlostechnologie koppelbar, so dass ein Datenaustausch ermöglicht wird. Ein solches Mobilgerät kann ein Mobiltelefon, ein Smartphone, ein Tablet oder ein Laptop sein. Selbstverständlich ist die vorliegende Erfindung nicht beschränkt auf diese Aufzählung und es können auch weitere ähnliche Datenverarbeitungsgeräte für die Anwendung in Betracht gezogen werden. Eine solche Drahtlostechnologie kann beispielsweise Bluetooth, NFC-(Nahfeldkommunikations-) Technologie, RFID- (radio-frequency identification) oder Wireless-LAN sein.

Mittels des Datenaustausches kann beispielsweise eine Diagnose der Sitzfunktion vorgenommen werden. Ferner können auf einfache Weise Softwareupdates vorgenommen werde. Denkbar wäre auch Verwendungsprotokolle des Sitzes oder maximale Belastungsprotokolle des Fahrzeugführers abzurufen.

Nach einer weiteren bevorzugten Ausführungsform ist nach dem Auswählen einer Bedienebene oder der Betätigung einer Funktion durch das Multifunktionsbedienelement dem Nutzer ein Bestätigungssignal präsentierbar. Vorzugsweise ist das Bestätigungssignal ein haptisches Signal. Ein solches haptisches Signal kann beispielsweise ein Vibrieren des Multifunktionsbedienelements sein. Denkbar wären jedoch auch optische oder akustische Bestätigungssignale.

Nach einer weiteren bevorzugten Ausführungsform ist das Multifunktionsbedienelement tafelförmig ausgestaltet. Das Multifunktionselement kann somit Abmessungen vergleichbar mit üblichen Smartphones aufweisen. Vorzugsweise weist das Multifunktionselement eine Länge in einem Bereich von 5 cm bis 15 cm, eine Breite in einem Bereich von 3 cm bis 10 cm und eine Höhe in einem Bereich von 0,5 cm bis 3 cm auf. Eine derartige Ausgestaltung bietet zum einen eine optimale Grifffläche für den Nutzer und zum anderen nimmt das Multifunktionselement nicht übermäßig viel Bauraum ein.

Nach einer weiteren bevorzugten Ausführungsform ist das Multifunktionselement mit haptischen Elementen und/oder einem Grip-Belag ausgestattet. Ein solcher Grip-Belag kann beispielsweise ein gummierter Belag oder ein Belag mit einer aufgerauten Oberfläche sein. Dadurch wird ein sicherer und angenehmer Griff des Multifunktionselements gewährleistet.

Erfindungsgemäß ist das Auswahlelement auf einer Oberfläche des Multifunktionsbedienelements angeordnet. Bevorzugt auf einer Oberfläche, welche durch die Länge und die Breite des Multifunktionsbedienelements begrenzt wird. Eine Anordnung an einer seitlichen Oberfläche, also eine Oberfläche, welche durch die Höhe und die Breite des Multifunktionsbedienelements begrenzt wird oder eine Oberfläche, welche durch die Höhe und die Länge des Multifunktionsbedienelements begrenzt wird, ist ebenso denkbar. Bei einer Ausführung des Auswahlelements als Berührbildschirm ist lediglich die Anordnung auf einer Oberfläche, welche durch die Länge und die Breite des Multifunktionsbedienelements begrenzt wird, sinnvoll.

Nach einer weiteren bevorzugten Ausführungsform ist das Multifunktionsbedienelement mit zumindest einem Identifikationselement versehen, mittels welchem die Schaltrichtungen identifizierbar sind. Derartige Identifikationselemente können beispielsweise Mulden am vorderen und hinteren Ende des Multifunktionsbedienelements sein, welche zur Identifikation der ersten und zweiten Schaltrichtungen (ziehen/schieben) dienen können.

Ferner können Mulden auf der Ober- und Unterseite des Multifunktionsbedienelements vorgesehen sein, welche zur Identifikation der dritten und vierten Schaltrichtungen (nach oben ziehen/nach unten drücken) dienen können. Die Ober- und Unterseite sind die sich gegenüberliegenden Oberflächen, welche durch die Länge und die Breite des Multifunktionsbedienelements begrenzt sind.

Zur Identifikation der fünften und der sechsten Schaltrichtung können ebenso anderweitig geformte Mulden auf der Ober- und Unterseite des Multifunktionsbedienelements vorgesehen sein. Ferner wäre es möglich eine entsprechende Formgebung des Multifunktionsbedienelements entsprechend der Fingerhaltung bei der Drehbewegung in der fünften und der sechsten Schaltrichtung als Identifikationselement auszubilden. Ferner wären auch Erhebungen, Vorsprünge oder anderweitig gestaltete haptische Elemente als Identifikationselemente geeignet.

Nach einer weiteren bevorzugten Ausführungsform ist eine Beleuchtung an dem Multifunktionsbedienelement vorgesehen. Diese Beleuchtung kann für das gesamte Multifunktionsbedienelement vorgesehen sein oder auch nur für einzelne Element wie die Identifikationselemente oder das zumindest eine Auswahlelement. Demnach kann beispielsweise der Berührbildschirm eine Hintergrundbeleuchtung aufweisen, um den Berührbildschirm zu illuminieren. Die Beleuchtung kann eine aktive Beleuchtung mittel üblicher Lampen oder LED sein oder ein lumineszierendes Material umfassen.

Nach einer bevorzugten Ausführungsform ist der Berührbildschirm beleuchtet, solange dieser aktiviert ist. Vorzugsweise kann die Beleuchtung automatisch aktiviert werden, wenn ein bestimmter Helligkeitswert, welcher durch einen Sensor gemessen wird, unterschritten wird. Weiter bevorzugt kann die Beleuchtung manuell aktivierbar sein. Weiter bevorzugt kann die Aktivierung der Beleuchtung anhand der Uhrzeit erfolgen.

Nach einer weiteren bevorzugten Ausführungsform ist mittels des zumindest einen Auswahlelements sowohl eine Bedienebene auswählbar, als auch eine bestimmte Funktion direkt bedienbar. Das Auswahlelement könnte auch als ein Berührbildschirm ausgestaltet sein. Nutzer können somit die gewünschten Einstellungen der Sitzparameter durch eine entsprechende Bewegung des Multifunktionsbedienelements entlang der Schaltrichtungen als auch mittels des Auswahlelements direkt, einstellen.

Nach einer weiteren bevorzugten Ausführungsform ist eine Bedienebene einer Kommunikationseinrichtung zugeordnet. Dies könnte beispielsweise eine Freisprecheinrichtung sein. Vorzugsweise ist eine Bedienebene bestimmten Fahrzeugeinstellungen zugeordnet. Derartige Fahrzeugeinstellungen können beispielsweise die Innenbeleuchtung, die Bedienung eines Radios oder Ähnliches betreffen. Es können somit auch Elemente bedient werden, welche keinen Bezug zu dem Sitz haben.

Die der Erfindung zugrundeliegende Aufgabe wird weiterhin gelöst durch einen Sitz, insbesondere Fahrzeugsitz, mit einer Bedieneinrichtung zur Einstellung von Sitzparametern nach einem der vorhergehend beschriebenen Ausführungsformen.

Nach einer weiteren bevorzugten Ausführungsform ist das Multifunktionsbedienelement an dem Sitzkissenteil und/oder an einer Armlehne angeordnet. Vorzugsweise ist das Multifunktionsbedienelement an einem seitlichen Abschnitt des Sitzkissenteils und/oder der Armlehne angeordnet. Unter einem seitlichen Abschnitt sind solche Abschnitte zu verstehen, welche sich an den seitlichen Begrenzungen in Breitenrichtung (Y1) des Sitzkissenteils oder der Armlehne befinden. Eine derartige Anordnung ist für einen Nutzer besonders einfach zu greifen.

Gemäß einer weiteren bevorzugten Ausführungsform umfasst der Sitz die Komponenten Sitzkissenteil, Rückenlehne, Kopfteil und zumindest eine Armlehne. Vorzugsweise ist eine Bedienebene dem gesamten Sitz oder zumindest einer Komponente zugeordnet. Bevorzugt entspricht dabei der durch eine bestimmte Funktion geänderte Sitzparameter einer Änderung der Position des gesamten Sitzes oder zumindest einer Komponente. Vorzugsweise entspricht der durch eine bestimmte Funktion geänderte Sitzparameter der Ausrichtung des gesamten Sitzes oder zumindest einer Komponente. Eine Änderung der Ausrichtung entspricht dabei einer Änderung der Neigung des gesamten Sitzes oder einer bestimmten Komponente.

Mögliche Änderungen der Sitzparameter für den Gesamtsitz können somit sein: Verlagerung entlang der Längsrichtung (X1) beziehungsweise Einstellung des Sitzabstands, Verlagerung entlang der Höhenrichtung (Z1) beziehungsweise Einstellung der Sitzhöhe und Drehbewegung um eine Achse entlang der Breitenrichtung (Y1) beziehungsweise Einstellung der Sitzneigung. Analog können die Armlehne, das Kopfteil und das Sitzkissen entlang der Längsrichtung (X1) und der Höhenrichtung (Z1) verlagert werden und somit die Höhe beziehungsweise die Position eingestellt werden. Ferner können sowohl Armlehne als auch Kopfteil und Sitzkissenteil in ihrer Neigung verändert werden. Schließlich kann die Länge des Sitzkissenteils verändert werden.

Gemäß einer weiteren bevorzugten Ausführungsform ist eine bestimmte Schaltrichtung einer Funktion einer ersten Bedienebene einer Änderung eines Sitzparameters eines ersten Elements, welches der gesamte Sitz oder eine Komponente sein kann, bezüglich einer bestimmten Sitzrichtung (X1, Y1, Z1) zugeordnet und die gleiche Schaltrichtung einer Funktion zumindest einer weiteren Bedienebene einer Änderung eines Sitzparameters eines zweiten Elements, welches der gesamte Sitz oder eine Komponente sein kann, bezüglich einer gleichen Sitzrichtung (X1, Y1, Z1) zugeordnet. Die Sitzrichtungen sind dabei die Längsrichtung (X1), die Breitenrichtung (Y1) und Höhenrichtung (Z1).

Demnach könnte der gesamte Sitz beispielsweise der ersten Bedienebene zugeordnet sein. Die Sitzhöhe könnte dann mit Bewegungen des Multifunktionsbedienelements entlang der dritten und vierten Schaltrichtungen (nach oben ziehen/nach unten drücken) einstellbar sein. Eine Auswahl zumindest einer weiteren Bedienebene könnte dann die Kopfstütze betreffen. Demnach könnte eine entsprechende Höheneinstellung durch eine Bewegung des Multifunktionsbedienelements entlang gleichen dritten und vierten Schaltrichtungen (nach oben ziehen/nach unten drücken) einstellbar sein. Es können somit alle Höheneinstellungen von Gesamtsitz und einzelnen Komponenten, alle Neigungseinstellungen und alle Verlagerungseinstellungen entlang einer bestimmten Sitzrichtung (X1, Y1, Z1) vorgenommen werden. Dies vereinfacht die Bedienbarkeit der einzelnen Einstellung der Sitzparameter, da sich der Nutzer nur die entsprechenden Schaltrichtungen für eine bestimmte Art von Parameteränderungen einprägen muss und lediglich die entsprechende Komponente auswählen.

Nach einer weiteren bevorzugten Ausführungsform verursacht eine Bewegung des Multifunktionsbedienelements in einer Schaltrichtung bezüglich einer Bewegungsachsen (X, Y,Z) eine gleichartige Änderung der Position und/oder der Ausrichtung des gesamten Sitzes oder zumindest einer Komponente bezüglich einer zu den Bewegungsachsen (X, Y,Z) parallelen Sitzrichtung (X1, Y1, Z1). Somit kann beispielsweise eine Höheneinstellung, welche eine Verlagerung des gesamten Sitzes oder einer Komponente entlang der Höhenrichtung (Z1) ist, durch die dritte oder vierte Schaltrichtung, welche bezüglich der zweiten Bewegungsachse (Z) bewegt wird, entsprechen. Weiterhin kann eine Verlagerung des gesamten Sitzes oder einer Komponente in Längsrichtung (X1) durch eine Bewegung des Multifunktionsbedienelements entlang der ersten oder zweiten Schaltrichtung erfolgen. Analog kann eine Neigung des gesamten Sitzes oder einer Komponente durch eine gleichartige Neigung des Multifunktionsbedienelements verursacht werden. Der Nutzer kann somit intuitiv die gewünschte Einstellung vornehmen ohne sich vorher entsprechende Schaltrichtungen einprägen zu müssen.

Nach einer weiteren bevorzugten Ausführungsform umfasst die Bedieneinrichtung eine Steuereinheit, welche ein Steuersignal des Multifunktionsbedienelements empfängt und zumindest einen Aktuator ansteuert, welcher die Parameter bezüglich der Position und oder Ausrichtung des gesamten Sitzes oder zumindest einer Komponente entsprechend verändert. Geeignete Aktuatoren sind in der Regel pneumatische, hydraulische oder elektrisch betriebene Aktoren. Die Verwendung anderweitiger Aktoren ist jedoch auch möglich.

Nach einer weiteren bevorzugten Ausführungsform ist eine Bedienebene zumindest einer Feder- und/oder Dämpfeinrichtung zugeordnet, welche in vertikaler und/oder horizontaler Richtung wirkt. Vorzugsweise entsprechen die zugehörigen Funktionen der Bedienebene den Parametereinstellungen der Feder- und/oder Dämpfeinrichtung. Demnach kann mittels einer Bewegung des Multifunktionsbedienelements entlang einer Schaltrichtung beispielsweise die Härte der Feder- und/oder Dämpfeinrichtung oder ein sonstiger Parameter dieser Einrichtung verändert werden. Vorzugsweise ist die Feder- und/oder Dämpfeinrichtung, welche in vertikaler Richtung wirkt, einer anderen Bedienebene zugeordnet als die Feder- und/oder Dämpfeinrichtung, welche in horizontaler Richtung wirkt. Bevorzugt umfasst die Bedieneinrichtung eine Steuereinheit, welche ein Steuersignal des Multifunktionsbedienelements empfängt und die zumindest eine Feder- und/oder Dämpfeinrichtung steuert.

Nach einer weiteren bevorzugten Ausführungsform ist eine Bedienebene zumindest einer Sitzkomforteinrichtung zugeordnet. Bevorzugt entsprechen die zugehörigen Funktionen der Bedienebene den Parametereinstellungen der Sitzkomforteinrichtung. Vorzugsweise kann eine Sitzkomforteinrichtung eine Sitzklimatisierungseinrichtung, insbesondere eine Sitzheizung oder eine Sitzventilation sein. Bevorzugt kann die Sitzkomforteinrichtung eine Sitzkontureinstellungseinrichtung sein. Eine Sitzkontureinstellungseinrichtung kann beispielsweise eine Einstellung der Seitenkissen am Sitzteil, eine Einstellung der Seitenwangen an der Rückenlehne, eine Einstellung der Kontur der Armlehne oder eine Änderung der Lordosenstütze sein. Die Änderungen der Lordosenstütze können eine Verlagerung des Lordosenstützenwölbscheitels nach oben oder unten oder eine Änderung der Wölbung der Lordosenstütze sein. Ferner könnte eine Sitzkomforteinrichtung eine Massageeinrichtung sein. Vorzugsweise umfasst die Bedieneinrichtung eine Steuereinheit, welche ein Steuersignal des Multifunktionsbedienelements empfängt und die zumindest eine Sitzkomforteinrichtung steuert.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Seitenansicht eines Sitzes mit einer Bedieneinrichtung;
- Fig.2 a-d: eine Seitenansicht des Multifunktionsbedienelements;
- Fig.3 a-c: eine Seitenansicht des Multifunktionsbedienelements nach weiteren Ausführungsformen;
- Fig.4: eine Seitenansicht eines Sitzes mit einer Bedieneinrichtung nach einer weiteren Ausführungsform;
- Fig.5: eine Seitenansicht eines Sitzes mit einer Bedieneinrichtung nach einer weiteren Ausführungsform;
- Fig.6: eine Seitenansicht eines Sitzes mit einer Bedieneinrichtung nach einer weiteren Ausführungsform;
- Fig.7 a-b: eine Draufsicht des Multifunktionsbedienelements nach weiteren Ausführungsform;
- Fig.8 a-c: eine Ansicht des Multifunktionsbedienelements nach weiteren Ausführungsformen;
- Fig.9: eine Ansicht des Multifunktionsbedienelements nach einer weiteren Ausführungsform;
- Fig.10: eine Ansicht des Multifunktionsbedienelements nach einer weiteren Ausführungsform;
- Fig.11: eine Ansicht des Multifunktionsbedienelements nach einer weiteren Ausführungsform;
- Fig.12: schematische Funktionsübersicht der Bedieneinrichtung;
- Fig.13: schematische Funktionsübersicht einer Bedienebene;
- Fig.14 bis Fig. 22: schematische Veranschaulichung einer Änderung eines Sitzparameters mit den zugehörigen Schaltrichtungen;
- Fig.23: schematische Darstellung eines Wechsels zwischen verschiedenen Bedienfeldern;
- Fig.24: eine alternative Darstellung eines Bedienfeldes.

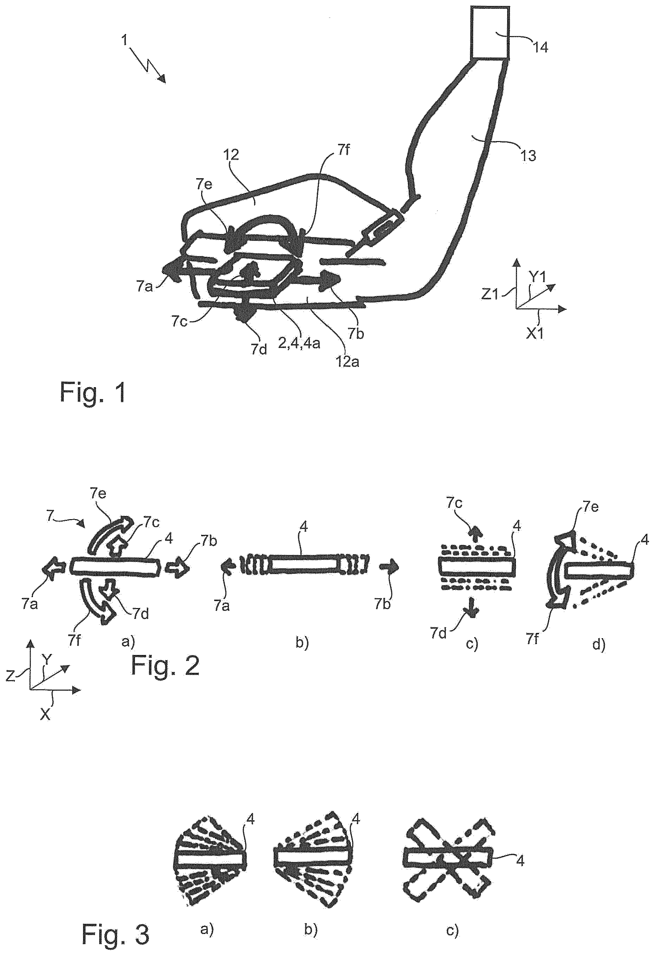

In den Figuren 1, 4 und 6 ist ein Sitz (1), insbesondere ein Fahrzeugsitz dargestellt. Der Sitz (1) umfasst die Komponenten Sitzkissenteil (12), Rückenlehne (13), Kopfteil (14) und zumindest eine Armlehne (15). Der Sitz ist entlang den Sitzrichtungen (X1, Y1, Z1) orientiert. Diese Sitzrichtungen sind die Längsrichtung (X1), die Breitenrichtung (Y1) und die Höhenrichtung (Z1).

Der Sitz (1), insbesondere Fahrzeugsitz ist mit einer Bedieneinrichtung (2) zur Einstellung von Sitzparametern (3) ausgestattet, wobei die Bedieneinrichtung (2) zumindest ein Multifunktionsbedienelement (4) umfasst, welches zumindest ein Auswahlelement (5) aufweist, mittels dem zumindest zwei Bedienebenen (6) auswählbar sind, wobei das Multifunktionsbedienelement (4) in zumindest fünf Schaltrichtungen (7), vorzugsweise sechs Schaltrichtungen (7) bewegbar ist, wobei jede Schaltrichtung (7) einer bestimmten Funktion (8) zuordenbar ist, welche der ausgewählten Bedienebene (6) angehört und einen Sitzparameter (3) ändert.

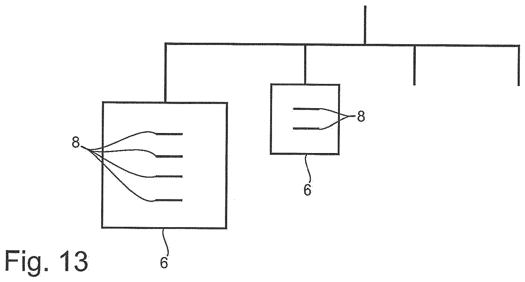

Durch das Auswahlelement (5) wird eine bestimmte Bedienebene (6) ausgewählt, welche eine Funktionengruppe, beispielsweise die Einstellung der Sitzparameter (3) für den gesamten Sitz (1) oder eine bestimmte Komponente (12, 13, 14, 15) des Sitzes (1) umfasst. Eine entsprechende Übersicht ist in Figur 13 dargestellt.

Alternativ kann mittels des zumindest einem Auswahlelements (5), sowohl eine Bedienebene (6), auswählt werden, als auch eine bestimmte Funktion (8) direkt bedient werden.

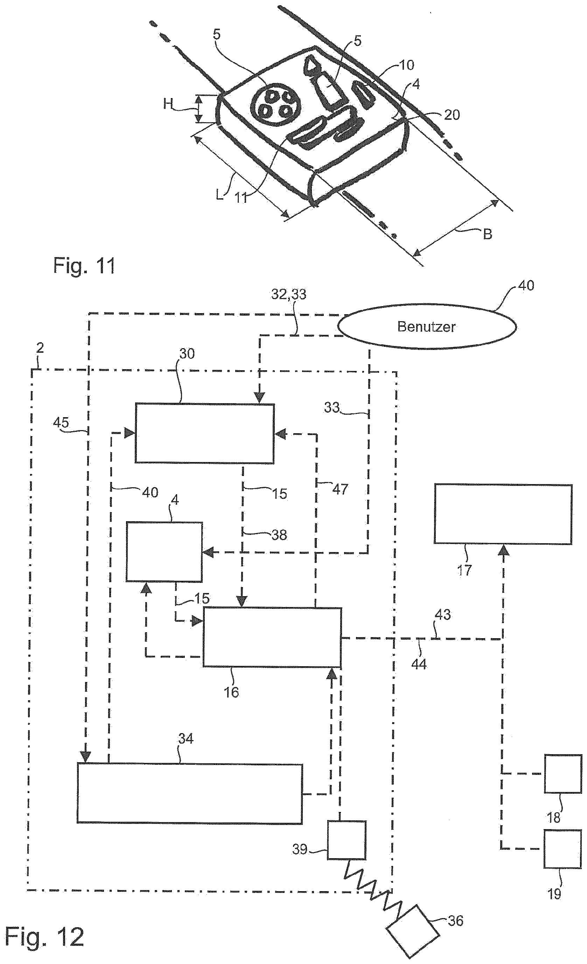

Die Bedieneinrichtung (6) umfasst eine Steuereinheit (16), welche ein Steuersignal (16) des Multifunktionsbedienelements (4) empfängt. Ferner wird ein entsprechendes Auswahlsignal beziehungsweis ein Steuersignal des Auswahlelements (5) empfangen, wie in Figur 12 dargestellt. Die Steuereinheit (16) steuert dann die entsprechenden Einrichtungen an, um die Sitzparameter (3) entsprechend zu ändern. Solche Einrichtungen sind Aktuatoren (17), eine oder mehrere Feder- und/oder Dämpfeinrichtung(en) (18) oder eine oder mehrere Sitzkomforteinrichtung(en) (19).

Das zumindest eine Multifunktionsbedienelement (4) kann an einem seitlichen Abschnitt (12a) des Sitzkissenteils (12) angeordnet werden. Dies ist beispielsweis in den Figuren 1, 4, 5 und 6 zu erkennen. Ferner kann das Multifunktionsbedienelement (4) an einem seitlichen Abschnitt (15a) der Armlehne (15) angeordnet sein. Der jeweilige seitliche Abschnitt befindet sich an der seitlichen Begrenzung des Sitzkissenteils (12) oder der Armlehne (15) in der Breitenrichtung (Y1) des Sitzes (1).

Das Multifunktionsbedienelement (4) ist dabei tafelförmig ausgestaltet.

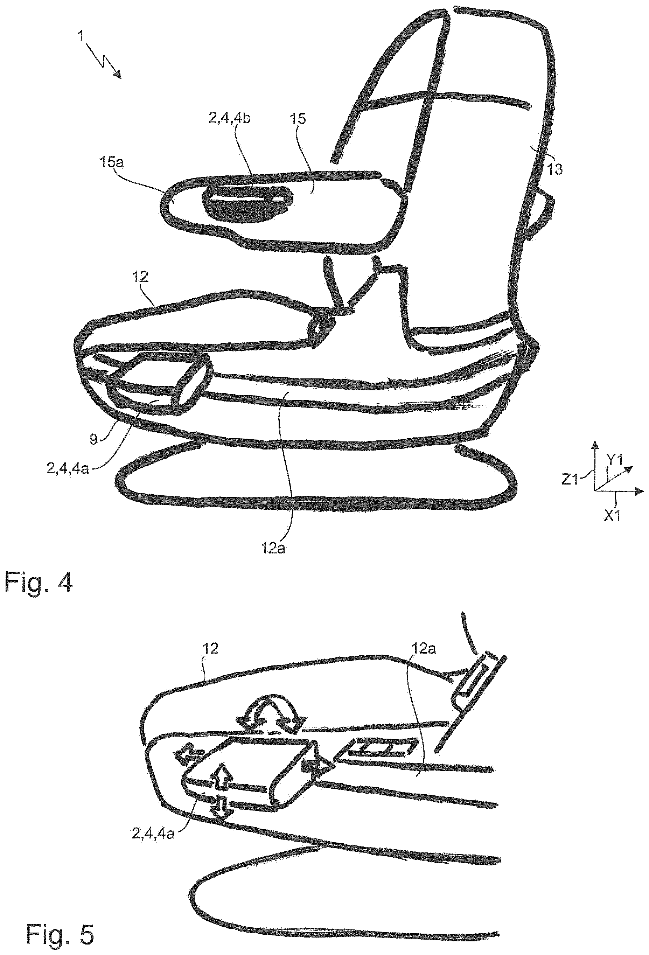

Während in Figur 1 ein Sitz mit nur einem Multifunktionsbedienelement (4) dargestellt ist, zeigen die Figuren 4 und 5 eine Ausführungsform, in welcher der Sitz (1) zwei Multifunktionsbedienelemente (4) aufweist. Dabei ist das erste Multifunktionsbedienelement (4a) am Sitzkissenteil (12) und das zweite Multifunktionsbedienelement (4b) an der Armlehne (15) angeordnet. Im Falle von zwei vorhandenen Multifunktionsbedienelementen (4, 4a, 4b) können beide Multifunktionsbedienelemente (4, 4a, 4b) die gleichen Bedienebenen (6) mit den dazugehörigen Funktionen (8) aufweisen oder unterschiedliche Bedienebenen (6).

Das jeweilige Multifunktionsbedienelement (4) ist in sechs Schaltrichtungen (7, 7a-7f) bewegbar, wobei das Multifunktionsbedienelement (4) drei Bewegungsachsen (X, Y, Z) aufweist. Dies ist in den Figuren 2a bis 2d gezeigt. Entlang einer Bewegungsachse (X, Y, Z) sind jeweils zwei entgegengesetzte Schaltrichtungen (7) orientiert.

In Figur 2b sind eine erste (7a) und eine zweite Schaltrichtung (7b) einer translatorischen Bewegung des Multifunktionsbedienelements (4) entlang einer ersten Bewegungsachse (X) in entgegengesetzten Richtungen gezeigt. Das Multifunktionsbedienelement (4) kann somit durch Ziehen oder Schieben entlang der ersten (7a) beziehungsweise zweiten Schaltrichtung (7b) bewegt werden. Die erste Bewegungsachse (X) verläuft dabei entlang der horizontalen Längsrichtung (X1) des Sitzes (1).

Die dritte (7c) und die vierte Schaltrichtung (7d) entsprechen einer translatorischen Bewegung des Multifunktionsbedienelements (4) entlang einer zweiten Bewegungsachse (Z) in jeweils entgegengesetzten Richtungen.

Alternativ können die dritte (7c) und die vierte Schaltrichtung (7d) einer Drehbewegung des Multifunktionsbedienelements (4) um die erste Bewegungsachse (X) in entgegengesetzten Richtungen entsprechen. Die zweite Bewegungsachse (Z) verläuft dabei entlang der Höhenrichtung (Z1) des Sitzes und ist senkrecht zu der ersten Bewegungsachse (X). Sowohl eine translatorische Bewegung des Multifunktionsbedienelements entlang der zweiten Bewegungsachse (Z) als auch eine Drehbewegung des Multifunktionsbedienelements um die erste Bewegungsachse (X) bedeutet für die sich im Sitz befindliche Person eine Bewegung des Multifunktionsbedienelements (4) nach oben oder unten. Das Multifunktionselement (4) ist dabei mittels eines Gelenks mit dem Sitzkissenteil (12, 12a) oder der Armlehne (15, 15a) verbunden.

Die fünfte (7e) und sechste Schaltrichtung (7f) entsprechen einer Drehbewegung des Multifunktionsbedienelements (4) um die dritte Bewegungsachse (Y) in jeweils entgegengesetzter Richtungen. Die dritte Bewegungsachse (Y) verläuft entlang der Breitenrichtung (Y1) des Sitzes (1) und ist senkrecht zu der ersten Bewegungsachse (X) und der zweiten Bewegungsachse (Z).

Der Drehpunkt kann dabei mittig, außermittig des Multifunktionsbedienelements (4) angeordnet sein wie in Figur 3c dargestellt. Entsprechend der Wahl des Drehpunkts ergibt sich eine bestimmte Drehbewegung des Multifunktionsbedienelements (4).

Alternativ könnte der Drehpunkt an einem vorderen Ende des Multifunktionsbedienelements (4) angeordnet sein, wie in Figur 3a dargestellt. In Figur 3b ist eine Ausführungsform gezeigt, in welcher der Drehpunkt am hinteren Ende des Multifunktionsbedienelements (4) angeordnet ist.

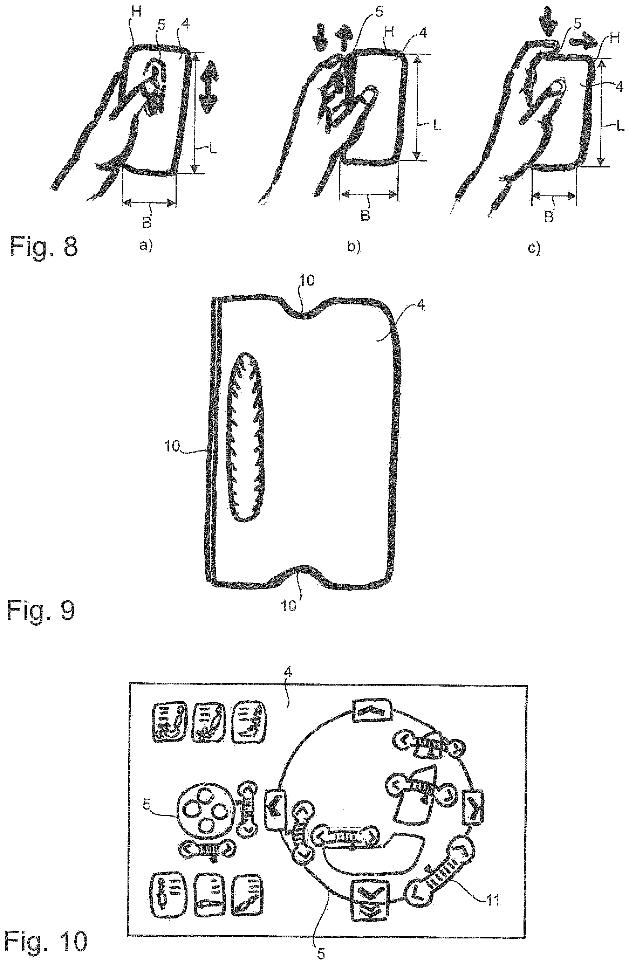

Das eine Auswahlelement (5) ist auf einer Oberfläche des tafelförmigen Multifunktionsbedienelements (4) angeordnet. In Figur 8 sind verschiedene mögliche Oberflächen gezeigt. In Figur 8a ist das Auswahlelement (5) auf der Oberfläche angeordnet, welche durch die Länge (L) und die Breite (B) des Multifunktionsbedienelements (4) begrenzt wird. In Figur 8b ist das Auswahlelement (5) auf der Oberfläche angeordnet, welche durch die Höhe (H) und die Länge (L) des Multifunktionsbedienelements (4) begrenzt wird. Figur 8c ist das Auswahlelement (5) auf der Oberfläche angeordnet, welche durch die Höhe (H) und die Breite (B) des Multifunktionsbedienelements (4) begrenzt wird. Das Auswahlelement (5) kann ein mehrstufiger Schalter oder Taster sein. In den Figuren 8a bis 8c wird beispielsweise ein mehrstufiger Schiebeschalter gezeigt. In Figur 11 wird ein kreuzförmiger Wipptaster gezeigt. Ferner kann das Multifunktionsbedienelement (4) mit haptischen Elementen (9) und / oder einem Grip- Belag (20) ausgestattet sein.

In den Figuren 10 und 11 ist eine Ausführungsform gezeigt, in welcher an dem Multifunktionsbedienelement (4) eine Anzeigeeinrichtung (11) angeordnet ist. Mittels einer solchen Anzeigeeinrichtung können die ausgewählten Bedienebenen und die ausgewählten Funktionen angezeigt werden.

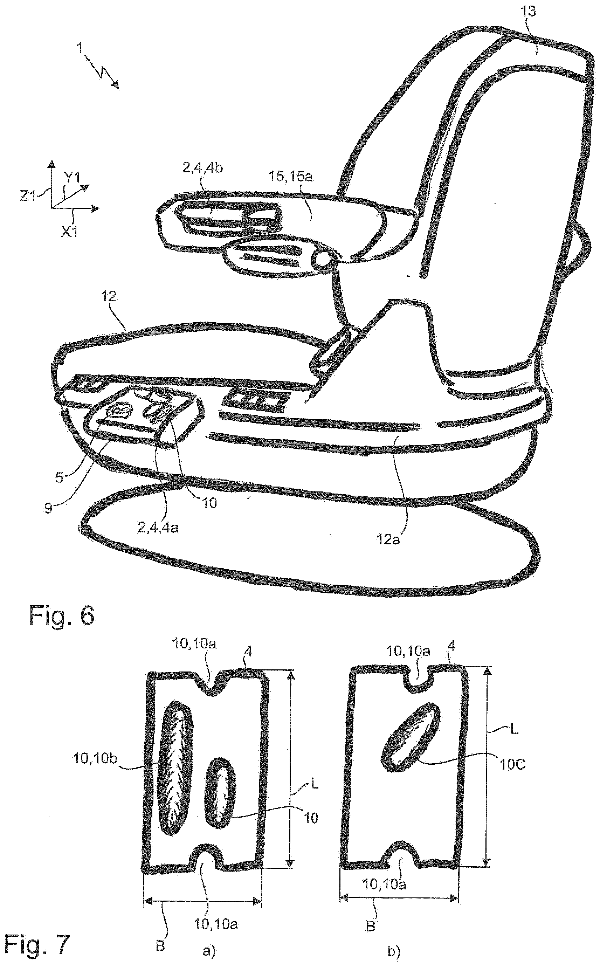

Ferner ist das Multifunktionsbedienelement (4) mit Identifikationselementen (10) versehen, mittels welcher die Schaltrichtungen identifizierbar sind. In den Figuren 7, 8, 9 sind solche Identifikationselemente (10) erkennbar.

In Figur 7 sind Identifikationselemente in Form von Mulden (10a) am vorderen und hinteren Ende des Multifunktionsbedienelements (4) dargestellt, welche zur Identifikation der ersten und zweiten Schaltrichtungen (ziehen/schieben) dienen können. Mit vorderem und hinterem Ende sind die Oberflächen gemeint, welche durch die Höhe (H) und die Breite (B) des Multifunktionsbedienelements (4) begrenzt sind.

Ferner können Mulden (10b) auf der Ober- und Unterseite des Multifunktionsbedienelements vorgesehen sein, welche zur Identifikation der dritten und vierten Schaltrichtungen (nach oben ziehen/nach unten drücken) dienen können. Die Ober- und Unterseite sind die sich gegenüberliegenden Oberflächen, welche durch die Länge (L) und die Breite (B) des Multifunktionsbedienelements (4) begrenzt sind.

Zur Identifikation der fünften (7e) und der sechsten Schaltrichtung (7f) ist in Figur 7b eine Mulde (10c) mit einer Formgebung entsprechend der Fingerhaltung bei der Drehbewegung in der fünften und der sechsten Schaltrichtung.

Die jeweiligen Identifikationselemente (10) können auch beleuchtet sein.

Eine bestimmte Schaltrichtung (7) einer Funktion (8) einer ersten Bedienebene (6) kann einer Änderung eines Sitzparameters (3) eines ersten Elements (1, 12, 13, 14, 15), welches der gesamte Sitz (1) oder eine Komponente (12, 13, 14, 15) sein kann, bezüglich einer bestimmten Sitzrichtung (X1, Y1, Z1) zugeordnet sein. Die gleiche Schaltrichtung (7) einer Funktion (8) zumindest einer weiteren Bedienebene (6) kann einer Änderung eines Sitzparameters (3) eines zweiten Elements (1, 12, 13, 14, 15), welches der gesamte Sitz (1) oder eine Komponente (12, 13, 14, 15) sein kann, bezüglich einer gleichen Sitzrichtung (X1, Y1, Z1) zugeordnet sein.

Ferner kann eine Bewegung des Multifunktionsbedienelements (4) in einer Schaltrichtung (7) bezüglich einer Bewegungsachse (X, Y,Z) eine gleichartige Änderung der Position und/oder der Ausrichtung des gesamten Sitzes (1) oder zumindest einer Komponente (12, 13, 14, 15) bezüglich einer zu den Bewegungsachsen (X, Y,Z) parallelen Sitzrichtung (X1, Y1, Z1) verursachen.

In Figur 12 ist eine Bedieneinrichtung (2) gemäß einer Ausführungsform gezeigt. Die Bedieneinrichtung (2) umfasst eine Steuereinheit (16), einen Berührbildschirm (30) und eine Sende- und Empfangseinrichtung (39), welche auf einer Drahtlostechnologie, beispielsweise Bluetooth, NFC-(Nahfeldkommunikations-) Technologie, RFID-(radio-frequency identification) oder Wireless-LAN, basiert.

Ein Benutzer (40) kann mittels von Benutzereingaben (32, 33) eine Eingabe auf dem Berührbildschirm (30) tätigen. Eine erste Benutzereingabe, welche vorzugsweise als Wischbewegung auf dem Berührbildschirm (30) getätigt wird, stellt eine Auswahl eines Bedienfeldes (31) dar, welches einer Bedienebene (6) zugeordnet ist.

Aufgrund einer Betätigung (45) des Aktivierungselements (34) oder aufgrund einer Aktivierung (33) durch das Multifunktionsbedienelement (4) wird zunächst ein erstes Aktivierungssignal (41) an den Berührbildschirm 3 übermittelt, wodurch der Berührbildschirm (30) aktiviert wird. Dadurch wird auf dem Berührbildschirm (30) ein erstes Bedienfeld (31, 31a) (nicht gezeigt in Figur 12) angezeigt.

Eine Bedienung einer bestimmten Funktion (8) kann nun durch eine zweite Benutzereingabe (33) auf dem Berührbildschirm (30), welche typischerweise eine Tippbewegung ist, erfolgen. Ebenso kann eine solche zweite weitere Benutzereingabe (33) eine Bewegung des Multifunktionsbedienelements (4) entlang einer Schaltrichtung (7) sein.

Aufgrund von Benutzereingaben (32, 33) des Benutzers (40) wird ein erstes Steuersignal (42) von dem Berührbildschirm (30) oder dem Multifunktionsbedienelement (4) an die Steuereinheit 9 übermittelt. Der Steuereinheit 9 wird dadurch mitgeteilt, um welche Benutzereingabe 5, 6 es sich handelt und wie oft oder in welchem Umfang eine derartige Benutzereingabe 5, 6 getätigt wird.

Die Steuereinheit sendet dann ein entsprechendes Ansteuerungssignal (44) an den entsprechenden Aktuator (17) und/oder die entsprechende Feder- und/oder Dämpfeinrichtung (18) und/oder die entsprechende Sitzkomforteinrichtung (19).

Weiter kann nach einer Auswahl eines Bedienfeldes (31) ein Kennsignal (38) von dem Berührungsbildschirm (30) an die Steuereinheit (16) übermittelt werden, insbesondere nach einer vorbestimmten ersten Zeitdauer. Nachdem die Steuereinheit (16) das Kennsignal (38) erhalten hat, sendet diese ein zweites Aktivierungssignal (43) an zumindest einen der Bedieneben (6) zugeordneten Aktuator (17) und/oder Feder- und/oder Dämpfeinrichtung (18) und/oder Sitzkomforteinrichtung (19), um diese Einrichtungen (17, 18 ,19) kurzzeitig zu aktivieren und dem Benutzer so eine Rückmeldung über die momentan ausgewählte Bedienebene (6) beziehungsweise dem momentan einzustellendem Sitzparameter zu übermitteln.

Es ist auch denkbar, dass nur eine Verbindung der Steuereinheit (16) mit dem Aktuator (17) und/oder Feder- und/oder Dämpfeinrichtung (18) und/oder Sitzkomforteinrichtung (19) hergestellt wird und basierend auf den entsprechenden zweiten Benutzereingaben (33) eine Ansteuerung dieser Einrichtungen (17, 18 ,19) durch die Steuereinheit (16) durchgeführt wird.

Darüber hinaus ist es denkbar, dass bei einer Betätigung (45) des Aktivierungselements (34) ein Prüfsignal (46) von dem Aktivierungselement (34) an die Steuereinheit (16) übermittelt wird, ob das erste Steuersignal (42) von dem Berührbildschirm (30) stammt.

Ferner kann die Steuereinheit (16) nach einer vorbestimmten zweiten Zeitdauer ein Deaktivierungssignal (47) an den Berührbildschirm (30) senden, wodurch der Berührbildschirm automatisch deaktivierbar ist.

Schließlich kann ein Mobilgerät (36) mittels einer Drahtlostechnologie mit dem Bedienelement (2) gekoppelt werden, so dass ein Datenaustausch ermöglicht wird. Dazu umfasst das Bedienelement (2) eine entsprechende Sende- und Empfangseinrichtung (39).

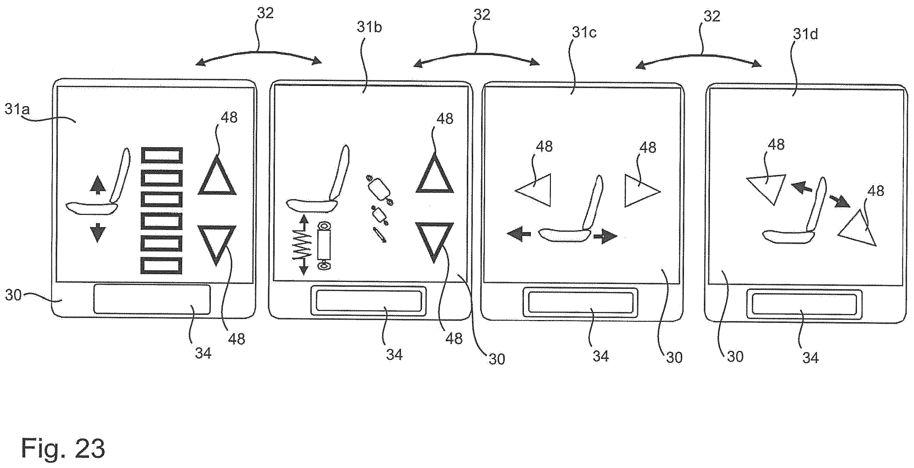

Die Figur 23 zeigt einen Wechsel, beziehungsweise ein Umschalten zwischen verschiedenen Bedienfeldern (31) mittels einer ersten Benutzereingabe (32), wobei ein erstes Bedienfeld 31a, ein zweites Bedienfeld 31b, ein drittes Bedienfeld 31c und ein viertes Bedienfeld 31d zu erkennen sind. Natürlich können auch weniger Bedienfelder oder mehr Bedienfelder 4-vorhanden sein, wobei zumindest zwei Bedienfelder vorteilhaft sind.

Wie weiter zu erkennen ist, sind die Bedienfelder (31, 31a, 31b, 31c, 31d) mittels eines Berührbildschirms (30) angezeigt, wobei vorliegend das Aktivierungselement (34) als ein Teil des Berührbildschirms (30) ausgestaltet ist.

Durch das erste Bedienfeld (31a) wird eine Sitzhöhenverstellung angezeigt, durch das zweite Bedienfeld (31b) eine vertikale Sitzdämpfung, durch das dritte Bedienfeld (31c) eine Sitzlängsverstellung und durch das vierte Bedienfeld (31d) eine Rückenlehnenneigung. Die entsprechenden Bedienebenen sind durch entsprechende Symbole kenntlich gemacht.

Mittels von ersten Benutzereingaben (32) kann zwischen den Bedienfeldern (31, 31a, 31b, 31c, 31d) hin und her gewechselt werden. Die erste Benutzereingabe (32) ist vorliegend eine Wischbewegung.

Die jeweiligen Bedienfelder (31, 31a, 31b, 31c, 31d) weisen zumindest ein Unterbedienfeld (48) auf, welches als sensitiver Tastenbereich ausgestaltet ist. Mittels einer zweiten Benutzereingabe (33), welche eine Tippbewegung oder aber auch eine Wischbewegung sein kann, kann eine entsprechende Eingabe erfolgen.

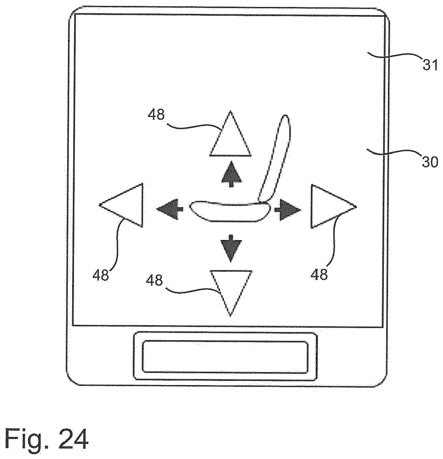

Die Figur 24 zeigt eine alternative Darstellung eines Bedienfeldes (31), in welchem in einem Bedienfeld mehrere Sitzparameter, welche zu unterschiedlichen Komponenten gehören einstellbar sind. Vorliegend handelt es sich hierbei um eine Sitzhöheneinstellung, dargestellt durch die Pfeile nach oben und nach unten, und eine Sitzlängsverstellung, dargestellt durch die Pfeile nach links und nach rechts.

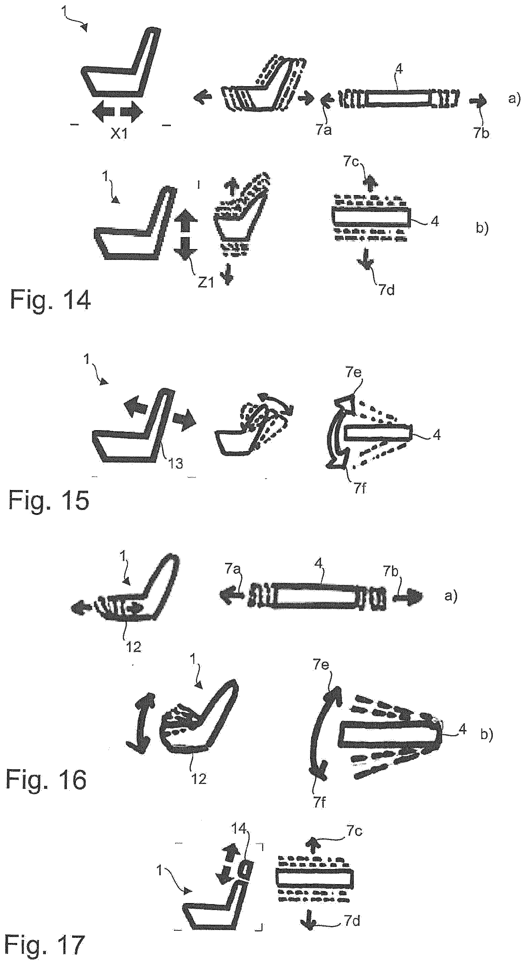

In den Figuren 14 bis 22 sind entsprechende Funktionen mit den dazugehörigen Schaltrichtungen nach einer Ausführungsform dargestellt. Tabelle 1 gibt dazu eine Übersicht.

Nach Figur 14a sind in der Bedienebene Gesamtsitz (1) die erste (7a) und zweite (7b) Schaltrichtung (Schieben-Ziehen, shift) der Sitzlängsverstellung zu erkennen. Bei einem "Schieben" verfährt der Gesamtsitz (1) nach vorne. Bei einem "Ziehen" verfährt der Gesamtsitz (1) nach hinten.

Nach Figur 14b sind in der Bedienebene Gesamtsitz (1) die dritte (7c) und vierte (7d) Schaltrichtung (Griff nach unten/oben drücken; Push-Pull) der Sitzhöheneinstellung zugeordnet. Bei einem "nach oben drücken (pull)" verfährt der Gesamtsitz (1) nach oben. Bei einem "Griff nach unten drücken (push)" verfährt der Gesamtsitz (1) nach unten.

Nach Figur 15 sind in der Bedienebene Gesamtsitz (1) oder Rückenlehne (13) die fünfte (7e) und sechste (7f) Schaltrichtung (Griff Kippen (flip)) die Lehnenneigungseinstellung oder die Gesamtsitzneigungseinstellung zugeordnet. Bei einem "nach hinten kippen" neigt sich die Rückenlehne (13) / der Gesamtsitz (1) nach hinten. Bei einem "nach vorne kippen" neigt sich die Rückenlehne (13) / der Gesamtsitz (1) nach vorne.

Nach Figur 16a sind in der Bedienebene Sitzkissenteil (12) die erste (7a) und zweite (7b) Schaltrichtung (Schieben-Ziehen, shift) der Sitzteillängenverstellung zugeordnet. Bei einem "Schieben" wird die Sitzkissenlänge länger. Bei einem "Ziehen" wird die Sitzkissenlänge kürzer.

Nach Figur 16b sind in der Bedienebene Sitzkissenteil (12) die fünfte (7e) und sechste (7f) Schaltrichtung (Griff Kippen (flip) die Sitzteilneigungseinstellung zugeordnet. Bei einem "nach hinten kippen" neigt sich das Sitzkissenteil (12) nach hinten. Bei einem "nach vorne kippen" neigt sich das Sitzkissenteil (12) nach vorne.

Nach Figur 17 sind in der Bedienebene Kopfteil (14) die dritte (7c) und vierte (7d) Schaltrichtung (Griff nach unten / oben drücken; Push-Pull) der Kopfteilhöheneinstellung zugeordnet. Bei einem "nach oben drücken (pull)" verfährt das Kopfteil (14) nach oben. Bei einem "Griff nach unten drücken (push)" verfährt das Kopfteil (14) nach unten.

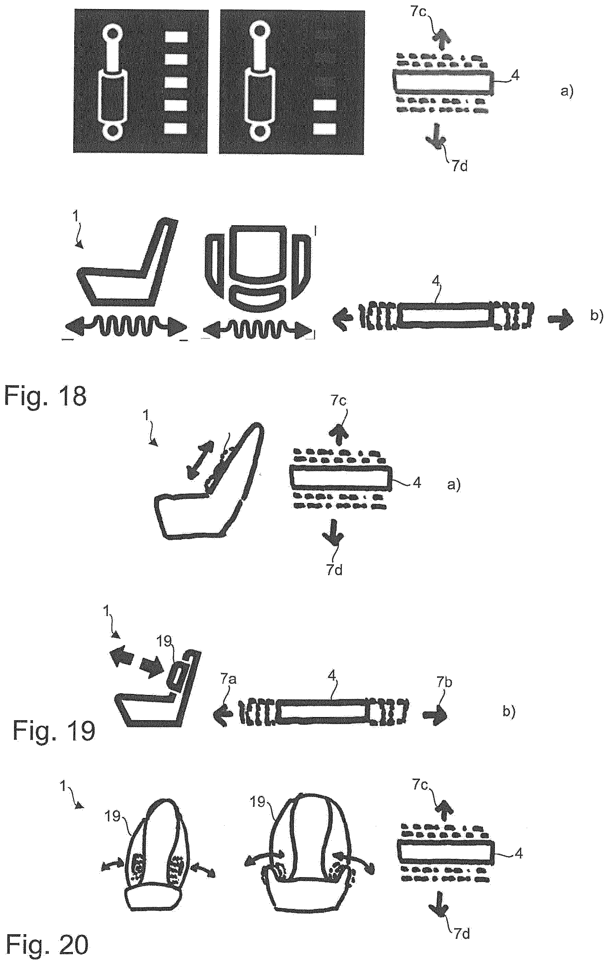

Nach Figur 18a sind in der Bedienebene Feder- und/oder Dämpfeinrichtung (18) die dritte (7c) und vierte (7d) Schaltrichtung (Griff nach unten/oben drücken; Push-Pull) der Feder- und/ oder Dämpfungscharakteristik zugeordnet. Bei einem "nach oben drücken (pull)" wird die Feder- und/oder Dämpfungscharakteristik härter. Bei einem "Griff nach unten drücken (push)" wird die Feder- und/oder Dämpfungscharakteristik weicher. Die Betätigung in der dritte (7c) und vierte (7d) Schaltrichtung kann mehrstufig erfolgen, d.h. eine weitere Betätigung in gleicher Richtung macht Feder- und/ oder Dämpfungscharakteristik noch härter beziehungsweise weicher.

Nach Figur 18b sind der Bedienebene Feder- und/oder Dämpfeinrichtung (18) die erste (7a) und zweite (7b) Schaltrichtung (Schieben-Ziehen, shift) der X-Richtung zugeordnet. Bei einem "Schieben" wird die Feder- und/oder Dämpfeinrichtung (18) eingeschaltet. Bei einem "Ziehen" wird die Feder- und/oder Dämpfeinrichtung (18) ausgeschaltet.

Nach Figur 19a sind in der Bedienebene Sitzkomforteinrichtung (19), Lordosenstütze die dritte (7c) und vierte (7d) Schaltrichtung (Griff nach unten / oben drücken; Push-Pull) der Verlagerung des Lordosenstützenwölbscheitels zugeordnet. Bei einem "nach oben drücken (pull)" wird der Lordosenstützenwölbscheitel nach oben verlagert. Bei einem "Griff nach unten drücken (push)" wird der Lordosenstützenwölbscheitel nach unten verlagert.

Nach Figur 19b sind in der Bedienebene Sitzkomforteinrichtung (19), Lordosenstütze die erste (7a) und zweite (7b) Schaltrichtung (Schieben-Ziehen, shift) der Einstellung der Wölbung der Lordosenstütze zugeordnet. Bei einem "Schieben" wird die Wölbung der Lordosenstütze stärker. Bei einem "Ziehen" wird die Wölbung der Lordosenstütze schwächer.

Nach Figur 20 sind in der Bedienebene Sitzkomforteinrichtung (19), Seitenwangen der Rückenlehne, Seitenwangen des Sitzteils (12) die dritte (7c) und vierte (7d) Schaltrichtung (Griff nach unten/oben drücken; Push-Pull) der Einstellung der Seitenwangen der Rückenlehne (13), beziehungsweise der Seitenwangen des Sitzteils (12) zugeordnet. Bei einem "nach oben drücken (pull)" werden die Seitenwangen in Rückenlehne (13) oder Sitzkissenteil (12) enger. Bei einem "Griff nach unten drücken (push)" werden die Seitenwangen in Rückenlehne (13) oder Sitzkissenteil (12) weiter.

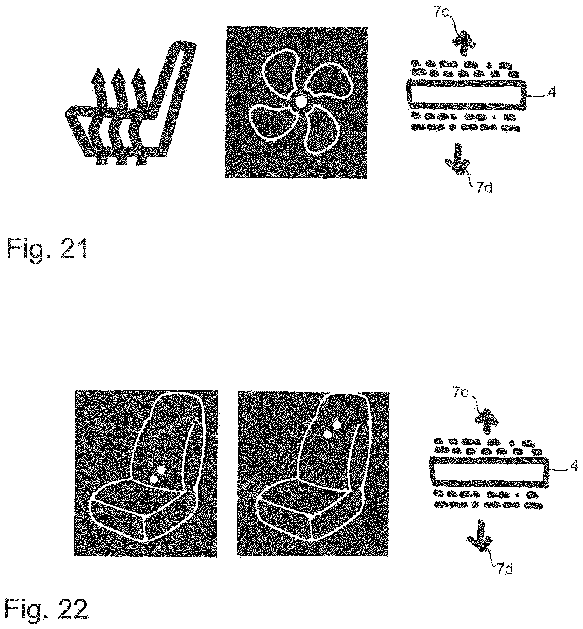

Nach Figur 21 sind in der Bedienebene Sitzkomforteinrichtung (19), Sitzklimatisierung (Sitzheizung, Sitzventilation) die dritte (7c) und vierte (7d) Schaltrichtung (Griff nach unten/oben drücken; Push-Pull) der Einstellung der Sitzkomforteinrichtung zugeordnet. Durch Ziehen oder Drücken (Push-Pull) wird die Sitzheizung, Sitzventilation eingeschaltet, stufenweise verstellt und ausgeschaltet. Folgende Stufen sind vorgesehen: Ziehen - Heizung (Ventilation) an, weiteres Ziehen - Heizstufe (Ventilationsstufe) höher, Drücken: Heizstufe (Ventilationsstufe) niedriger, Weiteres Drücken- Heizung (Ventilation) aus.

Nach Figur 22 sind in der Bedienebene Sitzkomforteinrichtung (19), Massageeinrichtung die dritte (7c) und vierte (7d) Schaltrichtung (Griff nach unten / oben drücken; Push-Pull) der Einstellung der Massageeinrichtung zugeordnet. Durch Ziehen oder Drücken (Push-Pull) wird die Massagefunktion eingeschaltet, stufenweise verstellt, und ausgeschaltet.

**Tabelle 1**

| Bedienebene | Funktion | Schaltrichtung | Figur |
|---|---|---|---|
| Gesamtsitz (1) | Sitz nach vorne/hinten Längsrichtung (X1) | erste (7a) / zweite (7b) | 14a |
| Gesamtsitz (1) | Sitz nach oben/unten Höhenrichtung (Y1) | dritte (7c) / vierte (7d) | 14b |
| Gesamtsitz (1) | Sitz neigen Bezüglich Achse entlang Breitenrichtung (Z1) | fünfte (7e) / sechste (7f) | - |
| Rückenlehne (13) | Rückenlehne neigen | fünfte (7e) / sechste (7f) | 15 |
| Sitzteil (12) | Sitzkissenlänge | erste (7a) / zweite (7b) | 16a |
| Sitzteil (12) | Sitzkissenneigungseinstellung | fünfte (7e) / sechste (7f) | 16b |
| Kopfteil (14) | Kopfteil nach vorne/hinten Längsrichtung (X1) | erste (7a) / zweite (7b) | 17 |
| Kopfteil (14) | Kopfteil nach oben/unten Höhenrichtung (Y1) | dritte (7c) / vierte (7d) | - |
| Kopfteil (14) | Kopfteil neigen Bezüglich Achse entlang Breitenrichtung (Z1) | fünfte (7e) / sechste (7f) | - |
| Feder- und/oder Dämpfeinrichtung (18) in X1, Y1, Z1 Richtung | Feder- und/oder Dämpfungscharakteristik wird weicher oder härter | dritte (7c) / vierte (7d) mehrstufig | 18a |
| Feder- und/oder Dämpfeinrichtung (18) in X1, Y1, Z1 Richtung | Feder- und/oder Dämpfeinrichtung ein oder ausschalten | erste (7a) / zweite (7b) | 18b |
| Sitzkomforteinrichtung (19) Lordosenstütze | Einstellung der Wölbung der Lordosenstütze | erste (7a) / zweite (7b) | 19b |
| Sitzkomforteinrichtung (19) Lordosenstütze | Lordosenstützenwölbscheitel nach oben unten | dritte (7c) / vierte (7d) | 19a |
| Sitzkomforteinrichtung (19), Seitenwangen der Rückenlehne (13), Seitenwangen des Sitzteils (12) | Einstellung der Seitenwangen der Rückenlehne (13), Seitenwangen des Sitzkissenteils (12) | dritte (7c) / vierte (7d) | 20 |
| Sitzkomforteinrichtung (19) Sitzheizung | Sitzheizung ein- ausschalten beziehungsweise einstellen | dritte (7c) / vierte (7d) mehrstufig | 21 |
| Sitzkomforteinrichtung (19), Sitzventilation | Sitzventilation ein- ausschalten beziehungsweise einstellen | dritte (7c) / vierte (7d) mehrstufig | 21 |
| Sitzkomforteinrichtung (19), Massageeinrichtung | Massageeinrichtung einausschalten beziehungsweise einstellen | dritte (7c) / vierte (7d) mehrstufig | 22 |

### Bezugszeichenliste

- 1: Sitz
- 2: Bedieneinrichtung
- 3: Sitzparameter
- 4: Multifunktionsbedienelement
- 4a: erstes Multifunktionsbedienelement
- 4b: zweites Multifunktionsbedienelement
- 5: Auswahlelement
- 6: Bedienebene
- 7: Schaltrichtung
- 7a: erste Schaltrichtung
- 7b: zweite Schaltrichtung
- 7c: dritte Schaltrichtung
- 7d: vierte Schaltrichtung
- 7e: fünfte Schaltrichtung
- 7f: sechste Schaltrichtung
- 8: Funktion
- 9: haptische Elementen
- 10: Identifikationselement
- 10a: Mulde
- 10b: Mulde
- 10c: Mulde
- 11: Anzeigeeinrichtung
- 12: Sitzkissenteil
- 12a: seitlicher Abschnitt des Sitzteils
- 13: Rückenlehne
- 14: Kopfteil
- 15: Armlehne
- 15a: seitlicher Abschnitt der Armlehne
- 16: Steuereinheit
- 17: Aktuator
- 18: Feder- und/oder Dämpfeinrichtung
- 19: Sitzkomforteinrichtung
- 20: Grip- Belag
- 30: Berührbildschirm
- 31: Bedienfeld
- 31a: erstes Bedienfeld
- 31b: zweites Bedienfeld
- 31c: drittes Bedienfeld
- 31d: viertes Bedienfeld
- 32: erste Benutzereingabe
- 33: zweite Benutzereingabe
- 34: Aktivierungselement
- 36: Mobilgerät
- 37: Datenaustausch
- 38: Kennsignal
- 39: Sende- und Empfangseinrichtung
- 40: Benutzer
- 41: erstes Aktivierungssignal
- 42: erstes Steuersignal
- 43: zweites Aktivierungssignal
- 44: Ansteuerungssignal
- 45: Betätigung des Aktivierungselements
- 46: Prüfsignal
- 47: Deaktivierungssignal
- 48: Unterbedienfelder
- X: erste Bewegungsachse
- Y: dritte Bewegungsachse
- Z: zweite Bewegungsachse
- X1: Längsrichtung
- Y1: Breitenrichtung
- Z1: Höhenrichtung
- L: Länge des Multifunktionsbedienelements
- B: Breite des Multifunktionsbedienelements
- H: Höhe des Multifunktionsbedienelements

## Patentansprüche

1. Bedieneinrichtung (2) zur Einstellung von Sitzparametern (3) eines Sitzes (1), insbesondere eines Fahrzeugsitzes, wobei die Bedieneinrichtung (2) zumindest ein Multifunktionsbedienelement (4) umfasst, welches zumindest ein Auswahlelement (5) aufweist, mittels dem zumindest zwei Bedienebenen (6) auswählbar sind, wobei das Multifunktionsbedienelement (4) in zumindest fünf Schaltrichtungen (7) bewegbar ist, wobei jede Schaltrichtung (7) einer bestimmten Funktion (8) zuordenbar ist, welche der ausgewählten Bedienebene (6) angehört und einen Sitzparameter (3) ändert, **dadurch gekennzeichnet, dass** das Auswahlelement (5) ein Berührbildschirm (30) zum Anzeigen und Auswählen von zumindest zwei Bedienfeldern (31) ist, wobei das Auswahlelement (5) auf einer Oberfläche des Multifunktionsbedienelements (4) angeordnet ist, wobei ein Bedienfeld (31) eine Bedienebene (6) repräsentiert, wobei mittels zumindest einer ersten Benutzereingabe (32) ein Bedienfeld (31) auswählbar ist, wobei die Bedienfelder (31, 31a, 31b, 31c, 31d) in einer festen Reihenfolge angeordnet sind, wobei der Berührbildschirm (30) jeweils ein einziges Bedienfeld (31) anzeigt, wobei die Benutzereingabe (32, 33) eine Wischbewegung oder eine Tippbewegung ist.

2. Bedieneinrichtung (2) nach Anspruch 1,
**dadurch gekennzeichnet, dass**
die Bedieneinrichtung (2) ein einziges Multifunktionsbedienelement (4) oder zwei Multifunktionsbedienelemente (4) oder mehrere Multifunktionsbedienelemente (4) umfasst.

3. Bedieneinrichtung (2) nach Anspruch 1 oder 2,
**dadurch gekennzeichnet, dass**
das Multifunktionsbedienelement (4) in sechs Schaltrichtungen (7) bewegbar ist, wobei das Multifunktionsbedienelement (4) drei Bewegungsachsen (X, Y, Z) aufweist, wobei jeweils zwei entgegengesetzte Schaltrichtungen (7) entlang einer Bewegungsachse (X, Y, Z) orientiert sind, wobei eine erste (7a) und eine zweite Schaltrichtung (7b) einer translatorischen Bewegung des Multifunktionsbedienelements (4) entlang der ersten Bewegungsachse (X), wobei eine dritte (7c) und eine vierte Schaltrichtung (7d) einer translatorischen Bewegung des Multifunktionsbedienelements (4) entlang einer zweiten Bewegungsachse (Z) oder einer Drehbewegung des Multifunktionsbedienelements (4) um die erste Bewegungsachse (X) entsprechen, wobei eine fünfte (7e) und eine sechste Schaltrichtung (7f) einer Drehbewegung des Multifunktionsbedienelements (4) um die dritte Bewegungsachse (Y) entsprechen.

4. Bedieneinrichtung (2) nach einem der vorhergehenden Ansprüche,
**dadurch gekennzeichnet, dass**
mittels des zumindest einem Auswahlelements (5) sowohl eine Bedienebene (6) auswählbar ist als auch eine bestimmte Funktion (8) direkt bedienbar ist.

5. Bedieneinrichtung (2) nach einem der vorhergehenden Ansprüche,
**dadurch gekennzeichnet, dass**
die Bedieneinrichtung (6) eine Steuereinheit (16) umfasst, welche ein Steuersignal (16) des Multifunktionsbedienelements (4) empfängt, wobei zumindest ein Aktuator (17) eines Sitzes (1) und/oder zumindest eine Feder- und/oder Dämpfeinrichtung (18) eines Sitzes (1) und/oder zumindest eine Sitzkomforteinrichtung (19) mittels der Steuereinheit (16) ansteuerbar sind.

6. Bedieneinrichtung (2) nach Anspruch 5,
**dadurch gekennzeichnet, dass**
nach der Auswahl einer Bedienebene (6) nach einer vorbestimmten ersten Zeitdauer ein Kennsignal (38) von dem Berührbildschirm (30) zu der Steuereinheit (16) übermittelbar ist, wobei die Steuereinheit (16) nach Erhalt des Kennsignals (38) zumindest einen der Bedienebene zugeordneten Aktuator (17) kurzzeitig aktiviert.

7. Bedieneinrichtung (2) nach einem nach einem der vorhergehenden Ansprüche,
**dadurch gekennzeichnet, dass**
die Bedieneinrichtung (2) manuell oder nach einer vorbestimmten zweiten Zeitdauer automatisch deaktivierbar ist, wobei die Bedieneinrichtung (2) durch eine Bewegung des Multifunktionsbedienelement (4) oder durch ein Aktivierungselement (34) aktivierbar ist, wobei nach einer vorbestimmten dritten Zeitdauer der Berührbildschirm (30) das erste Bedienfeld (31a) anzeigt.

8. Bedieneinrichtung (2) nach einem der vorhergehenden Ansprüche,
**dadurch gekennzeichnet, dass**
nach dem Auswählen einer Bedienebene (6) oder der Betätigung einer Funktion durch das Multifunktionsbedienelement (4) dem Nutzer ein Bestätigungssignal präsentierbar ist, wobei das Bestätigungssignal ein haptisches Signal ist.

9. Bedieneinrichtung (2) nach einem der vorhergehenden Ansprüche,
**dadurch gekennzeichnet, dass**
die Bedieneinrichtung (2) mit einem weiteren Mobilgerät (36) mittels einer Drahtlostechnologie koppelbar ist, sodass ein Datenaustausch (37) ermöglicht wird.

10. Bedieneinrichtung (2) nach einem der vorhergehenden Ansprüche,
**dadurch gekennzeichnet, dass**
das Multifunktionsbedienelement (4) tafelförmig ausgestaltet ist, wobei das Multifunktionsbedienelement (4) mit haptischen Elementen (9) und/oder einem Grip- Belag (20) ausgestattet ist, und/oder eine Beleuchtung an dem Multifunktionsbedienelement (4) vorgesehen ist.

11. Bedieneinrichtung (2) nach einem der vorhergehenden Ansprüche,
**dadurch gekennzeichnet, dass**
das Multifunktionsbedienelement (4) mit zumindest einem Identifikationselement (10) versehen ist, mittels welchem die Schaltrichtungen (7) identifizierbar sind.

12. Sitz (1) insbesondere Fahrzeugsitz, mit einer Bedieneinrichtung (2) zur Einstellung von Sitzparametern (3) nach einem der vorhergehenden Ansprüche 1 bis 11.

13. Sitz (1) nach Anspruch 12,
**dadurch gekennzeichnet, dass**
das Multifunktionsbedienelement (4) an dem Sitzteil (12) und/oder an einer Armlehne (15) angeordnet ist, wobei das Multifunktionsbedienelement (4) an einem seitlichen Abschnitt (12a, 15a) des Sitzteils (12) und/oder der Armlehne (15) angeordnet ist.

14. Sitz (1) nach Anspruch 12,
**dadurch gekennzeichnet, dass**
ein Aktuator (17) die Parameter bezüglich der Position und oder Ausrichtung des gesamten Sitzes (1) oder zumindest einer Komponente (12, 13, 14, 15) entsprechend verändert.

## Claims

1. Operating device (2) for setting seat parameters (3) of a seat (1), in particular a vehicle seat, wherein the operating device (2) comprises at least one multifunction operating element (4) having at least one selection element (5) by means of which at least two operating levels (6) are selectable, wherein the multifunction operating element (4) is moveable in at least five switching directions (7), wherein each switching direction (7) is assignable to a particular function (8) associated with the selected operating level (6) and changing a seat parameter (3),
**characterized in that**
the selection element (5) is a touch screen (30) for displaying and selecting at least two control panels (31), wherein one control panel (31) represents an operating level (6), wherein one control panel (31) is selectable by means of at least one first user input (32), wherein the control panels (31, 31a, 31b, 31c, 31d) are arranged in a fixed sequence, wherein the touch screen (30) indicates a single control panel (31) in each case, wherein the user input (32, 33) is a swiping or a tapping movement.

2. Operating device (2) according to claim 1,
**characterized in that**
the operating device (2) comprises a single multifunction operating element (4) or two multifunction operating elements (4) or a plurality of multifunction operating elements (4).

3. Operating device (2) according to claim 1 or 2,
**characterized in that**
the multifunction operating element (4) is moveable in six switching directions (7), wherein the multifunction operating element (4) has three axes of movement (X, Y, Z), wherein each two opposite switching directions (7) are oriented along a movement axis (X, Y, Z), wherein a first (7a) and a second switching direction (7b) correspond to a translational movement of the multifunction operating element (4) along the first axis of movement (X), wherein a third (7c) and a fourth switching direction (7d) correspond to a translational movement of the multifunction operating element (4) along a second axis of movement (Z) or a rotational movement of the multifunction operating element (4) about the first axis of movement (X), wherein a fifth (7e) and a sixth switching direction (7f) correspond to a rotational movement of the multifunction operating element (4) about the third axis of movement (Y).

4. Operating device (2) according to one of the preceding claims,
**characterized in that**
both an operating level (6) is selectable and a specific function (8) is operateable directly by means of the at least one selection element (5).

5. Operating device (2) according to one of the preceding claims,
**characterized in that**
the operating device (6) comprises a control unit (16) receiving a control signal (16) from the multifunction operating element (4), wherein at least one actuator (17) of a seat (1) and/or at least one spring and/or cushioning device (18) of a seat (1) and/or at least one seat comfort device (19) can be controlled by means of the control unit (16).

6. Operating device (2) according to claim 5,
**characterized in that**
after the selection of a control level (6), an identification signal (38) is transmittable from the touch screen (30) to the control unit (16) after a predetermined first duration, wherein the control unit (16) briefly activates at least one of the actuators (17) assigned to the operating level after receipt of the identification signal (38).

7. Operating device (2) according to one of the preceding claims,
**characterized in that**
the operating device (2) is deactivatable manually or automatically after a predetermined second duration, wherein the operating device (2) is activatable by a movement of the multifunction operating element (4) or by an activation element (34), wherein after a predetermined third duration, the touch screen (30) displays the first control panel (31a).

8. Operating device (2) according to one of the preceding claims,
**characterized in that**
after selecting a control level (6) or actuation of a function by the multifunction operating element (4), a confirmation signal is presentable to the user, wherein the confirmation signal is a haptic signal.

9. Operating device (2) according to one of the preceding claims,
**characterized in that**
the operating device (2) is connectable with another mobile device (36) by means of a wireless technology, so that a data exchange (37) is enabled.

10. Operating device (2) according to one of the preceding claims,
**characterized in that**
the multifunction operating element (4) is designed in a tabular form, wherein the multifunction operating element (4) is equipped with haptic elements (9) and/or a grip layer (20), and/or an illumination is provided on the multifunction operating element (4).

11. Operating device (2) according to any one of the preceding claims,
**characterized in that**
the multifunction operating element (4) is provided with at least one identification element (10) by means of which the switching directions (7) are identifiable.

12. Seat (1), in particular vehicle seat, with an operating device (2) for setting seat parameters (3) according to one of the preceding claims 1 to 11.

13. Seat (1) according to claim 12,
**characterized in that**
the multifunction operating element (4) is arranged on the seat section (12) and/or on an armrest (15), wherein the multifunction operating element (4) is arranged on a lateral section (12a, 15a) of the seat section (12) and/or the armrest (15).

14. Seat (1) according to claim 12,
**characterized in that**
an actuator (17) changes the parameters relating to the position and/or orientation of the entire seat (1) or at least one component (12, 13, 14, 15) accordingly.

## Revendications

1. Dispositif de commande (2) pour le réglage de paramètres de siège (3) d'un siège (1), en particulier d'un siège de véhicule, le dispositif de commande (2) comportant au moins un élément de commande multifonctions (4), lequel présente au moins un élément de sélection (5), au moyen duquel au moins deux niveaux de commande (6) sont sélectionnables, l'élément de commande multifonctions (4) étant déplaçable dans au moins cinq directions de commutation (7), chaque direction de commutation (7) étant apte à être associée à une fonction déterminée (8), laquelle appartient au niveau de commande sélectionné (6) et modifie un paramètre de siège (3),
**caractérisé par le fait que**
l'élément de sélection (5) est un écran tactile (30) pour l'affichage et la sélection d'au moins deux panneaux de commande (31), l'élément de sélection (5) étant disposé sur une surface de l'élément de commande multifonctions (4), un panneau de commande (31) représentant un niveau de commande (6), un panneau de commande (31) étant sélectionnable au moyen d'au moins une première entrée utilisateur (32), les panneaux de commande (31, 31a, 31b, 31c, 31d) étant disposés dans un ordre fixe, l'écran tactile (30) affichant dans chaque cas un seul panneau de commande (31), l'entrée utilisateur (32, 33) étant un mouvement de balayage ou un mouvement de tapotement.

2. Dispositif de commande (2) selon la revendication 1,
**caractérisé par le fait que**
le dispositif de commande (2) comporte un seul élément de commande multifonctions (4) ou deux éléments de commande multifonctions (4) ou plusieurs éléments de commande multifonctions (4).

3. Dispositif de commande (2) selon l'une des revendications 1 ou 2,
**caractérisé par le fait que**
l'élément de commande multifonctions (4) est déplaçable dans six directions de commutation (7), l'élément de commande multifonctions (4) présentant trois axes de déplacement (X, Y, Z), respectivement deux directions de commutation opposées (7) étant orientées le long d'un axe de déplacement (X, Y, Z), une première (7a) et une deuxième direction de commutation (7b) correspondant à un mouvement de translation de l'élément de commande multifonctions (4) le long du premier axe de déplacement (X), une troisième (7c) et une quatrième direction de commutation (7d) correspondant à un mouvement de translation de l'élément de commande multifonctions (4) le long d'un deuxième axe de déplacement (Z) ou à un mouvement de rotation de l'élément de commande multifonctions (4) autour du premier axe de déplacement (X), une cinquième (7e) et une sixième direction de commutation (7f) correspondant à un mouvement de rotation de l'élément de commande multifonctions (4) autour du troisième axe de déplacement (Y).

4. Dispositif de commande (2) selon l'une des revendications précédentes,
**caractérisé par le fait que**
non seulement un niveau de commande (6) est sélectionnable mais encore une fonction déterminée (8) est commandable directement au moyen dudit au moins un élément de sélection (5).

5. Dispositif de commande (2) selon l'une des revendications précédentes,
**caractérisé par le fait que**
le dispositif de commande (6) comporte une unité de commande (16), laquelle reçoit un signal de commande (16) de l'élément de commande multifonctions (4), au moins un actionneur (17) d'un siège (1) et/ou au moins un dispositif à ressort et/ou d'amortissement (18) d'un siège (1) et/ou au moins un dispositif de confort d'assise (19) étant commandables au moyen de l'unité de commande (16).

6. Dispositif de commande (2) selon la revendication 5,
**caractérisé par le fait qu'**
après la sélection d'un niveau de commande (6), après une première période prédéterminée, un signal d'identification (38) est transmissible de l'écran tactile (30) à l'unité de commande (16), l'unité de commande (16) activant brièvement au moins un actionneur (17) associé au niveau de commande après réception du signal d'identification (38).

7. Dispositif de commande (2) selon l'une des revendications précédentes,
**caractérisé par le fait que**
le dispositif de commande (2) est désactivable manuellement ou automatiquement après une seconde période prédéterminée, le dispositif de commande (2) étant activable par un déplacement de l'élément de commande multifonctions (4) ou par un élément d'activation (34), l'écran tactile (30) affichant le premier panneau de commande (31a) après une troisième période prédéterminée.

8. Dispositif de commande (2) selon l'une des revendications précédentes,
**caractérisé par le fait qu'**
après la sélection d'un niveau de commande (6) ou l'actionnement d'une fonction par l'élément de commande multifonctions (4), un signal de confirmation est apte à être présenté à l'utilisateur, le signal de confirmation étant un signal haptique.

9. Dispositif de commande (2) selon l'une des revendications précédentes,
**caractérisé par le fait que**
le dispositif de commande (2) est apte à être couplé à un autre dispositif mobile (36) au moyen d'une technologie sans fil, de telle sorte qu'un échange de données (37) est possible.

10. Dispositif de commande (2) selon l'une des revendications précédentes,
**caractérisé par le fait que**
l'élément de commande multifonctions (4) est conçu sous forme de tableau, l'élément de commande multifonctions (4) étant équipé d'éléments haptiques (9) et/ou d'un revêtement de préhension (20), et/ou un éclairage étant prévu sur l'élément de commande multifonction (4).

11. Dispositif de commande (2) selon l'une des revendications précédentes,
**caractérisé par le fait que**
l'élément de commande multifonctions (4) est doté d'au moins un élément d'identification (10), au moyen duquel les directions de commutation (7) sont identifiables.

12. Siège (1) en particulier siège de véhicule, comportant un dispositif de commande (2) pour le réglage de paramètres de siège (3) selon l'une des revendications précédentes 1 à 11.

13. Siège (1) selon la revendication 12,
**caractérisé par le fait que**
l'élément de commande multifonctions (4) est disposé sur la partie assise (12) et/ou sur un accoudoir (15), l'élément de commande multifonctions (4) étant disposé sur une section latérale (12a, 15a) de la partie assise (12) et/ou de l'accoudoir (15).

14. Siège (1) selon la revendication 12,
**caractérisé par le fait qu'**
un actionneur (17) modifie de façon correspondante les paramètres concernant la position et/ou l'orientation de tout le siège (1) ou d'au moins un composant (12, 13, 14, 15).
